# FASCICULE DE BREVET EUROPEEN

(11) **EP 0 445 241 B1**
(45) Date de publication et mention de la délivrance du brevet: **10.11.1993**
(21) Numéro de dépôt: 90911296.3
(22) Date de dépôt: 03.07.1990
(51) Int. Cl.: F04B 37/14, F04B 49/02, F04B 41/06, F04B 49/00

(54) **GROUPE DE POMPAGE A VIDE**
VAKUUMPUMPENEINHEIT
VACUUM PUMPING GROUP

(30) Priorité: 27.09.1989 FR 8912656
(43) Date de publication de la demande: 11.09.1991
(73) Titulaire: ALCATEL CIT, 75008 Paris (FR)
(72) Inventeur: BÜRGER, Heinz, Dieter, D-6980 Wertheim 2 (DE); HANDKE, Klaus, D-6980 Wertheim Wartberg (DE); SAULGEOT, Claude, F-74290 Veyrier-du-Lac (FR)
(74) Mandataire: Weinmiller, Jürgen
(86) Numéro de dépôt international: FR9000502
(87) Numéro de publication internationale: WO9105166

(56) Documents cités:
- EP-A- 308 846
- DE-A- 3 444 169
- FR-A- 1 140 189
- FR-A- 2 276 487
- US-A- 2 936 107
- US-A- 4 596 514
- US-A- 4 699 570

## Description

La présente invention concerne un groupe de pompage à vide.

Un groupe de pompage à vide, se compose habituellement d'un sous-ensemble de pompage primaire et d'un sous-ensemble de pompage secondaire, l'enceinte à vider étant reliée à l'aspiration du sous-ensemble de pompage secondaire.

Le document DE-A-3 444 169 décrit un système de pompage dans lequel il est prévu d'optimiser le fonctionnement d'un ensemble de pompage à vide en faisant varier la vitesse de la pompe amont en fonction du rapport de la valeur actuelle à la valeur de consigne, de un ou de plusieurs paramètres tels que pressions en différents points, températures ou intensité du courant du moteur d'entraînement de ladite pompe amont.

Il est en outre connu que la vitesse de rotation du moteur d'entraînement du sous-ensemble de pompage secondaire soit asservi à la pression de l'enceinte à vider en utilisant une jauge de mesure de dépression. Cela permet, lorsque le vide limite est atteint, de diminuer la vitesse de la pompe secondaire et ainsi de limiter son usure.

Cependant, les jauges de mesure de vide ne sont pas très précises.

Le principe de l'invention consiste à agir non pas sur le sous-ensemble de pompage secondaire, mais sur le sous-ensemble de pompage primaire et surtout à ne pas utiliser de jauge de mesure de vide, mais à utiliser directement le courant électrique du moteur d'entraînement du sous-ensemble de pompage secondaire.

En application de cette idée, et selon les différents montages utilisés, l'invention prend deux formes voisines.

Selon une première forme, l'invention a pour objet un groupe de pompage comprenant un sous-ensemble de pompage secondaire entraîné en rotation par un moteur électrique M₂ et aspirant dans l'enceinte à vider, et un sous-ensemble de pompage primaire entrainé en rotation par un moteur électrique M₁ et dont l'aspiration est reliée au refoulement du sous-ensemble de pompage secondaire, caractérisé en ce qu'il comporte un circuit électronique de commande de la vitesse de rotation du moteur électrique M₁ en fonction de l'intensité du courant du moteur électrique M₂.

Selon une deuxième forme, l'invention a pour objet un groupe de pompage à vide comprenant un sous-ensemble de pompage secondaire entraîné en rotation par un moteur électrique M₂ et aspirant dans l'enceinte à vider, et un sous-ensemble de pompage primaire, caractérisé en ce que ledit sous-ensemble de pompage primaire comprend un premier sous-ensemble de pompage à gros débit relié directement à l'enceinte à vider et entraîné par un moteur électrique M'₁ et un second sous-ensemble de pompage à petit débit entraîné en rotation par un moteur électrique M''₁ et dont l'aspiration est reliée au refoulement du sous-ensemble de pompage secondaire et en ce qu'un circuit de commande électronique commande l'arrêt du moteur électrique M'₁ lorsque l'intensité du courant du moteur M₂ descend au-dessous d'une valeur déterminée.

Selon une autre caractéristique, ledit circuit de commande électronique commande en outre la vitesse de rotation du moteur électrique M''₁ en fonction de l'intensité du moteur M₂.

Le système est plus simple, plus précis et moins coûteux que d'utiliser une jauge à vide. On passe donc par l'intensité du courant du moteur d'entraînement du sous-ensemble de pompage secondaire, sachant que cette intensité est fonction de la pression de l'enceinte à vider.

L'invention va maintenant être décrite en se référant au dessin annexé dans lequel :

La figure 1 est une figure schématique représentant un groupe de pompage à vide selon l'invention.

La figure 2 est une figure schématique représentant un groupe de pompage à vide selon l'invention et dans lequel le sous-ensemble de pompage primaire se subdivise lui-même en deux sous-ensembles.

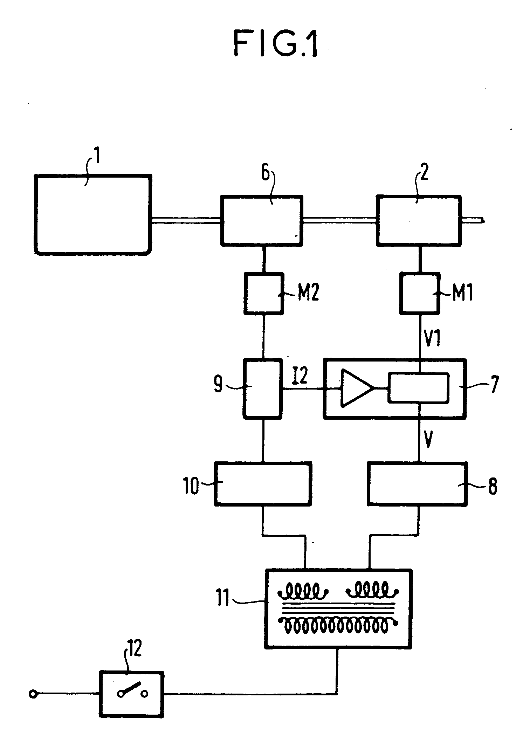

En revenant à la figure 1, on voit une enceinte à vide 1 à laquelle est relié un groupe de pompage qui comprend un sous-ensemble de pompage secondaire 6 entraîné en rotation par un moteur M₂ et un sous-ensemble de pompage primaire 2 entraîné en rotation par un moteur électrique à courant continu M₁.

Le moteur M₁ est alimenté sous une tension V₁ par un circuit électronique de commande 7 qui reçoit en entrée d'une part une tension V en provenance d'une alimentation 8, et d'autre part un signal représentatif de l'intensité I₂ du courant du moteur d'entraînement M₂, élaboré par un circuit de mesure d'intensité 9. Le circuit de commande 7 donne en sortie, une tension V₁ fonction du courant I₂ du moteur M₂. Dans un cas particulier intéressant par sa simplicité, le circuit de commande 7 est un simple circuit à seuil qui fournit en sortie une tension V₁ pouvant prendre deux valeurs selon que le courant I₂ dépasse ou descend au-dessous d'une valeur déterminée.

En 10 on a l'alimentation du moteur M₂, en 11 un transformateur d'alimentation et en 12 l'interrupteur de commande de démarrage du groupe.

Ainsi, les deux sous-ensembles de pompage sont mis en route simultanément. Depuis la pression atmosphérique jusqu'à une pression de quelques millibars, la tension V₁ demeure au maximum et le moteur M₁ tourne à la vitesse de rotation maximale. Le sous-ensemble de pompage primaire 2 fonctionne avec un débit maximal et le temps pour descendre de la pression atmosphérique à quelques millibars est le plus court. Lorsque le sous-ensemble de pompage secondaire 6 commence à travailler dans le domaine qui lui est favorable, aux environs d'une pression inférieure à 10 millibars, le courant I₂ décroît et la tension V₁ est réduite à une faible valeur. Ainsi, le moteur M₁, à courant continu, tourne à faible vitesse de rotation et le débit du sous-ensemble de pompage primaire 2 est réduit mais suffisant pour entretenir le pompage nécessaire de la pompe secondaire 6.

On n'utilise donc à pleine vitesse de rotation le sous-ensemble de pompage primaire 2 que pendant le temps où on a besoin d'un grand débit, c'est-à-dire lorsque la pompe secondaire ne travaille pas dans le domaine de pression qui lui est favorable et plus particulièrement entre la pression atmosphérique et quelques millibars. Ce temps est en général relativement faible, car il est plus facile de descendre la pression d'une enceinte de la pression atmosphérique à quelques millibars qu'ensuite, de quelques millibars à 10⁻⁶ mbar.

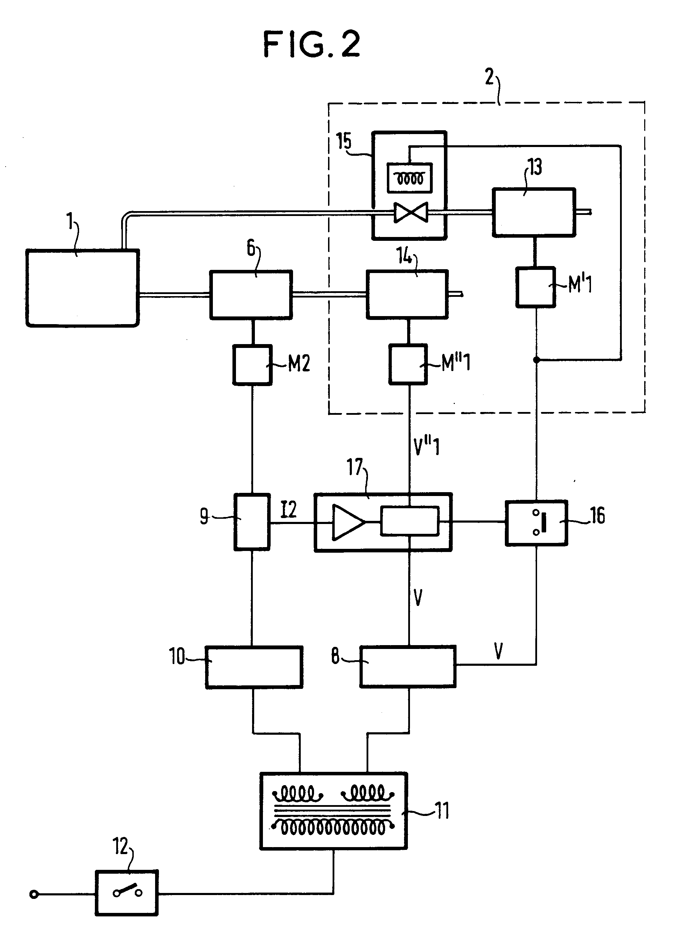

La figure 2 montre un groupe de pompage dans lequel le sous-ensemble de pompage primaire 2 est lui-même divisé en deux sous-ensembles : un premier sous-ensemble de pompage primaire à gros débit 13 entraîné par un moteur électrique M'₁ et un second sous-ensemble de pompage à petit débit 14 entraîné en rotation par un moteur électrique M''₁. Le sous-ensemble de pompage primaire à gros débit 13 est relié directement à l'enceinte à vide 1 par l'intermédiaire d'une électrovanne 15.

Le sous-ensemble 14 est relié, comme dans le cas de la figure 2, au refoulement du sous-ensemble de pompage secondaire 6.

Le moteur M'₁ du sous-ensemble de pompage primaire à gros débit 13 est alimenté par l'alimentation 8 par l'intermédiaire d'un interrupteur 16 commandé par un circuit de commande 17 qui reçoit en entrée, d'une part la tension V de l'alimentation 8 et d'autre part, comme dans le cas précédent, un signal représentatif du courant I₂. En sortie, il fournit d'une part un signal de commande d'ouverture ou de fermeture de l'interrupteur 16 et d'autre part une tension V''₁ fonction du courant I₂.

Dans cet exemple, le sous-ensemble à gros débit 13 ne fonctionne que pendant la phase de prévidage, tant que l'intensité I₂ reste supérieure à une valeur déterminée. Ensuite, l'interrupteur 16 est ouvert et la pompe 13 est arrêtée et l'électro-vanne 15 fermée, seule la pompe 14 fonctionne ensuite.

Selon le cas, le circuit de commande 17 peut, soit fournir en sortie une tension V''₁ constante, indépendante du courant I₂, soit, comme dans le cas précédent, fournir une tension V''₁ qui prendra une valeur plus faible lorsque la pression dans l'enceinte 1 sera tombée à quelques millibars. Le moteur M''₁ est un moteur électrique à courant continu.

Ainsi, grâce à l'invention, la(ou les pompes) du sous-ensemble de pompage primaire 2 tourne à pleine vitesse pendant un temps faible d'où une moindre usure, une moindre puissance électrique consommée, un échauffement moindre, moins de vibrations et un moindre niveau sonore. En outre, dans le cas de la figure 2, la pompe à gros débit 13 est, elle, complètement arrêtée en dehors de la période de prévidage. Enfin, l'utilisation du courant I₂ de la pompe secondaire, pour commander le sous-ensemble primaire 2 est plus simple, plus précis et moins coûteux que d'utiliser une jauge à vide.

## Revendications

1. Groupe de pompage à vide comprenant un sous-ensemble de pompage secondaire (6) entraîné en rotation par un moteur électrique M₂ et aspirant dans l'enceinte à vider (1), et un sous-ensemble de pompage primaire (2) entraîné en rotation par un moteur électrique M₁ et dont l'aspiration est reliée au refoulement du sous-ensemble de pompage secondaire (6), caractérisé en ce qu'il comporte un circuit électronique de commande (7) de la vitesse de rotation du moteur électrique M₁ en fonction de l'intensité I₂ du courant du moteur électrique M₂.

2. Groupe de pompage à vide selon la revendication 1, caractérisé en ce que ledit moteur électrique M₁ est un moteur à courant continu, ledit circuit électronique de commande agissant sur la tension d'alimentation V₁ du moteur M₁.

3. Groupe de pompage à vide comprenant un sous-ensemble de pompage secondaire (6) entrarné en rotation par un moteur électrique M₂ et aspirant dans l'enceinte à vider (1), et un sous-ensemble de pompage primaire (2), caractérisé en ce que ledit sous-ensemble de pompage primaire (2) comprend un premier sous-ensemble de pompage à gros débit (13) relié directement à l'enceinte à vider (1) et entraîné en rotation par un moteur électrique M'₁ et un second sous-ensemble de pompage à petit débit (14) entraîné en rotation par un moteur électrique M''₁ et dont l'aspiration est reliée au refoulement du sous-ensemble de pompage secondaire (6) et en ce qu'un circuit de commande électronique (17) commande l'arrêt du moteur électrique M'₁ lorsque l'intensité I₂ du courant du moteur M₂ descend au-dessous d'une valeur déterminée.

4. Groupe de pompage à vide selon la revendication 3, caractérisé en ce que ledit circuit de commande électronique (17) commande en outre la vitesse de rotation du moteur électrique M''₁ en fonction de l'intensité I₂ du courant du moteur M₂.

5. Groupe de pompage à vide selon la revendication 4, caractérisé en ce que ledit moteur électrique M''₁ est un moteur à courant continu, ledit circuit électronique de commande agissant sur la tension V''₁ d'alimentation du moteur M''₁.

## Patentansprüche

1. Vakuum-Pumpstand mit einer Sekundärpumpen-Untereinheit (6), die von einem Elektromotor M₂ in Drehung versetzt wird und aus dem leerzupumpenden Raum (1) ansaugt, und mit einer Primärpumpen-Untereinheit (2), die von einem Elektromotor M₁ in Drehung versetzt wird und deren Saugseite mit dem Auslaß der Sekundärpumpen-Untereinheit (6) verbunden ist, dadurch gekennzeichnet, daß er einen Elektroniksteuerkreis (7) zur Steuerung der Drehgeschwindigkeit des Elektromotors M₁ abhängig von der Stromstärke I₂ des Elektromotors M₂ aufweist.

2. Vakuum-Pumpstand nach Anspruch 1, dadurch gekennzeichnet, daß der Elektromotor M₁ ein Gleichstrommotor ist, wobei der Elektroniksteuerkreis auf die Speisespannung V₁ des Motors M₁ einwirkt.

3. Vakuum-Pumpstand mit einer Sekundärpumpen-Untereinheit (3), die von einem Elektromotor M₂ in Drehung versetzt wird und aus dem leerzupumpenden Raum (1) ansaugt, und mit einer Primärpumpen-Untereinheit (2), dadurch gekennzeichnet, daß diese Primärpumpen-Untereinheit (2) eine erste Pump-Untereinheit mit großem Durchsatz (13), die direkt mit dem leerzupumpenden Raum (1) verbunden ist und von einem Elektromotor M'₁ angetrieben wird, und eine zweite Pump-Untereinheit mit kleinem Durchsatz (14) aufweist, die von einem Elektromotor M''₁ angetrieben wird und deren Saugseite mit dem Auslaß der Sekundärpumpen-Untereinheit (6) verbunden ist, und daß ein Elektroniksteuerkreis (17) den Elektromotor M'₁ zum Anhalten bringt, wenn die Stromstärke I₂ des Motors M₂ unter einen bestimmten Wert sinkt.

4. Vakuum-Pumpstand nach Anspruch 3, dadurch gekennzeichnet, daß der Elektroniksteuerkreis (17) außerdem die Drehgeschwindigkeit des Elektromotors M''₁ in Abhängigkeit von der Stromstärke des Motors M₂ steuert.

5. Vakuum-Pumpstand nach Anspruch 4, dadurch gekennzeichnet, daß der Elektromotor M''₁ ein Gleichstrommotor ist, wobei der Elektroniksteuerkreis auf die Speisespannung V''₁ des Motors M''₁ einwirkt.

## Claims

1. A vacuum pump unit including a secondary pump sub-assembly (6) rotated by an electric motor M₂ and applying suction to a chamber to be evacuated (1), and a primary pump sub-assembly (2) rotated by an electric motor M₁ and whose suction is connected to the output of the secondary pump sub-assembly (6), the unit being characterized in that it includes an electronic control circuit (7) for controlling the speed of rotation of the electric motor M₁ as a function of to the current I₂ drawn by the electric motor M₂.

2. A vacuum pump unit according to claim 1, characterized in that said electric motor M₁ is a DC motor, said electronic control circuit acting on the power supply voltage V₁ of the motor M₁.

3. A vacuum pump unit including a primary pump sub-assembly (2) and a secondary pump sub-assembly (6) rotated by an electric motor M₂ and applying suction to a chamber to be evacuated (1), the unit being characterized in that said primary pump sub-assembly (2) comprises a high flow-rate first pump sub-assembly (13) linked directly to the chamber to be evacuated (1) and rotated by an electric motor M'₁, and a low flow-rate second pump sub-assembly (14) rotated by an electric motor M''1 and whose suction is connected to the outlet of the secondary pump sub-assembly (6) and in that an electronic control circuit stops the electric motor M'₁ when the current I₂ drawn by the motor falls below a predetermined value.

4. A vacuum pump unit according to claim 3, characterized in that said electronic control circuit (17) additionally controls the speed of rotation of the electric motor M''₁ as a function of the current I₂ drawn by the motor M₂.

5. A vacuum pump unit according to claim 4, characterized in that said electric motor M''₁ is a DC motor, said electronic control circuit acting on the power supply voltage V''₁ of the motor M''₁.
